Europäisches Patentamt

(19) European Patent Office

Office européen des brevets

(11) Numéro de publication: **0 140 809**

**B1**

(12) **FASCICULE DE BREVET EUROPEEN**

(45) Date de publication du fascicule du brevet: **18.05.88**

(51) Int. Cl.⁴: **H 04 B 3/23**

(21) Numéro de dépôt: **84460007.2**

(22) Date de dépôt: **09.10.84**

(54) Dispositif de correction d'échos, notamment pour système de télédiffusion de données.

(30) Priorité: **28.10.83 FR 8317438**

(43) Date de publication de la demande:
**08.05.85 Bulletin 85/19**

(45) Mention de la délivrance du brevet:
**18.05.88 Bulletin 88/20**

(84) Etats contractants désignés:
**AT BE CH DE GB IT LI LU NL SE**

(56) Documents cités:
**EP-A-0 052 362**
**US-A-3 787 645**

**IEEE TRANSACTIONS ON CONSUMER ELECTRONICS, vol. CE-27, no. 3, août 1981, pages 512-529, New York, US; J.O. VOORMAN et al.: "A one-chip automatic equalizer for echo reduction in teletext"**

**IEEE TRANSACTIONS ON CONSUMER ELECTRONICS, vol. CE-28, no. 3, août 1982, pages 447-452, New York, US; M. OBARA et al.: "A digital time domain equalizer for teletext"**

(73) Titulaire: **Etablissement Public de Diffusion dit "Télédiffusion de France"**
**21-27 rue Barbès**
**F-92120 Montrouge (FR)**

(72) Inventeur: **Dublet, Guy Pierre**
**227, rue de Fougères**
**F-35000 Rennes (FR)**
Inventeur: **Palicot, Jacques Paul**
**36, rue Duhamel**
**F-35100 Rennes (FR)**

(74) Mandataire: **Le Guen, Louis François**
**Cabinet Louis Le Guen 1, avenue Edouard VII B.P. 91**
**F-35802 Dinard Cédex (FR)**

Documents cités:
**NATIONAL TELECOMMUNICATIONS CONFERENCE, Houston, 30 novembre - 4 décembre 1980, vol. 3, pages 56.4.1 - 56.4.4, IEEE, New York, US; E.J. McDEVITT: "A microprocessor based adaptive digital echo canceller"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Description

La présente invention concerne un dispositif de correction d'échos en transmission numérique, c'est-à-dire de correction d'interférence entre symboles, la correction étant effectuée sur le signal analogique démodulé reçu. Plus particulièrement, l'invention concerne un dispositif de correction d'échos intervenant dans un système de télédiffusion de données, tel que celui qui est décrit dans le brevet FR—2 313 825 et qui est mis en oeuvre sous le nom de "Réseau DIDON" par l'Etablissement public de diffusion dit "Télédiffusion de France".

Dans le réseau DIDON, les données binaires sont transmises en modulation d'amplitude en code NRZ par paquets sur des lignes d'image de télévision diffusées notamment par voies hertzienne et la fréquence bit est de 6,2 MHz. Le canal de télédiffusion apporte un certain nombre de perturbations au signal vidéo, tels que des évanouissements sélectifs, du bruit et des échos résultant de réflexions proches du lieu de réception. La réponse impulsionnelle se trouve donc déformée et, compte tenu de la fréquence bit élevée qui est utilisée, il en résulte un phénomène de chevauchement des impulsions, c'est-à-dire un phénomène d'interférence entre symboles. Comme les phénomènes d'échos accroissent la sensibilité du signal au bruit et aux parasites, il est important de prévoir, dans les récepteurs de données du réseau DIDON, un correcteur d'échos.

Dans l'ouvrage "TELEINFORMATIQUE transport et traitement de l'information dans les réseaux et systèmes téléinformatiques" par C. Macchi et J-F. Guilbert (Ed. DUNOD 1979), le phénomène des interférences entre symboles est traité au § 3.1.4. Pour réduire ces interférences, on prévoit un récepteur linéaire à filtre numérique, éventuellement adaptatif, comme cela est indiqué au § 3.3.3.F. Un filtre numérique linéaire est décrit au § A.2.2 de ce même ouvrage.

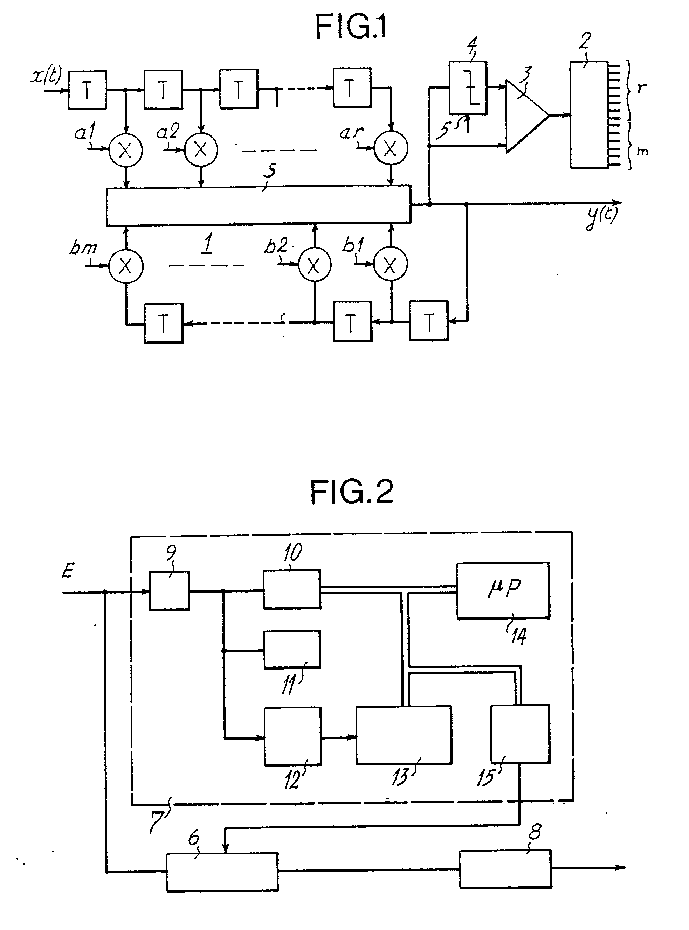

La Fig. 1 montre le schéma d'un correcteur autoadaptatif linéaire d'un type connu qui comprend, d'une part, un filtre transversal récursif 1 et, d'autre part, un circuit de calcul 2, 3 et 4. Le filtre 1 est semblable à celui qui est montré à la Fig. A.2. de la page 489 de l'ouvrage déjà cité. Dans le filtre 1, le signal à corriger x(t) est appliqué à l'entrée d'une première chaîne de $r$ cellules montées en série et apportant chacune un retard égal à T où T est l'inverse de la fréquence bit. Les sorties des $r$ cellules sont reliées aux premières entrées de $r$ multiplicateurs dont les coefficients de multiplication sont respectivement a1 à ar. Les sorties des $r$ multiplicateurs sont reliées à des entrées correspondantes d'un sommateur S. La sortie du sommateur S, qui délivre le signal corrigé y(t), est également reliée à une chaîne de $m$ cellules montées en série et apportant chacune un retard T. Les sorties des $m$ cellules sont reliées aux entrées de $m$ multiplicateurs dont les coefficients multiplicateurs sont respectivement b1 à bm. Les sorties des $m$ multiplicateurs sont reliées à des entrées correspondantes du sommateur S. Le circuit de calcul 2 délivre les coefficients a1 à ar et b1 à bm qui sont appliqués, dans le filtre 1, aux entrées correspondantes des multiplicateurs. L'entrée du circuit de calcul 2 est reliée à la sotrie d'un comparateur 3 dont une entrée est reliée directement à la sortie du filtre 1 et dont l'autre entrée est reliée à la sortie d'un détecteur à seuils 4 dont l'entrée de signal est également reliée à la sortie du filtre 1. Le détecteur à seuils 4 a une entrée de commande 5 à laquelle est appliquée une tension de référence définissant les seuils.

Il existe des variantes du correcteur de la Fig. 1. Dans une première variante, le filtre 1 est un filtre direct et non récursif, ce qui revient à annuler les coefficients b1 à bm. Dans une seconde variante, le détecteur à seuil 4 est ajouté dans la partie récursive. Si un signal de référence est directement appliqué à la seconde entrée du comparateur 3, le filtre étant alors uniquement adaptatif au lieu d'être autoadaptatif.

La tension de référence appliquée à l'entrée de commande 5 du détecteur à seuil 4 est généralement égale à la valeur moyenne de l'amplitude du signal de sortie du filtre 1. Le signal de sortie du détecteur à seuil 4 correspond donc à une valeur estimée ŷ(t) du signal de sortie y(t). Le comparateur 3 délivre donc l'erreur e(t)=ŷ(t)−y(t). Dans le circuit de calcul 2, on utilise comme critère d'optimisation du correcteur celui de l'erreur quadratique moyenne:

$$(H) = E( \mid a_k - y_k \mid ^2)$$

où $a_k$ est le signal émis, lequel est remplacé par une valeur estimée dans le cas d'un filtre autoadaptatif. Dans un filtre autoadaptatif, on cherche les coefficients composant le vecteur $\vec{H}$ qui minimisent cette expression.

Un objet de l'invention consiste à prévoir un dispositif de correction comprenant un filtre linéaire analogique dont les coefficients peuvent être déterminés en appliquant des techniques de calcul numérique.

Suivant une caractéristique de l'invention, il est prévu un dispositif de correction comprenant un filtre transversal analogique et un circuit de calcul délivrant les coefficients directs a1 à ar ou les coefficients directs a1 à ar et récursifs b1 à bm du filtre transversal analogique, l'entrée du circuit de calcul étant reliée à l'entrée du filtre transversal analogique et le circuit de calcul comprenant un convertisseur analogique/numérique dont la sortie est reliée à un filtre transversal numérique autoadaptatif, certains, au moins, des coefficients des multiplicateurs du filtre transversal numérique étant appliqués aux multiplicateurs du filtre transversal analogique.

Suivant une autre caractéristique, le filtre transversal analogique est direct ou récursif selon que le filtre transversal numérique est direct ou récursif.

Suivant une autre caractéristique, dans le circuit de calcul, le critère d'optimisation est celui de l'erreur quadratique moyenne et l'algorithme de convergence est celui du gradient, la correction itérative étant effectuée à chaque pas sur l'ensemble des coefficients du filtre.

Suivant une autre caractéristique, le critère d'optimisation est celui de l'erreur quadratique moyenne et l'algorithme de convergence est celui du gradient, la correction itérative étant cycliquement effectuée sur chacun des coefficients.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est le schéma d'un dispositif de correction faisant partie de l'état de la technique,

la Fig. 2 est un bloc-diagramme d'un dispositif de correction suivant l'invention,

la Fig. 3 est un bloc-diagramme schématique d'un circuit de calcul formé de circuits discrets fonctionnant comme le circuit de calcul de la Fig. 2, et

la Fig. 4 est un bloc-diagramme d'une variante du circuit de calcul de la Fig. 3.

Dans la circuit de correction de la Fig. 2, le signal vidéo portant les données est appliqué à l'entrée E qui est reliée en parallèle, d'une part, à un filtre transversal 6 et, d'autre part, à un circuit de calcul 7. Le filtre 6 fonctionne directement sur le signal analogique appliqué à l'entrée E1 et délivre un signal analogique corrigé lequel est appliqué à un démodulateur DIDON 8 qui est, de préférence, du type du récepteur décrit dans le brevet FR—2 313 824.

Le circuit de calcul 7 comprend un circuit de clampage 9 dont la sortie est reliée en parallèle à un circuit de calcul de valeur moyenne 10, un circuit de synchronisation 11 et à un convertisseur analogique-numérique 12 dont la sortie est reliée à une mémoire 13. Le circuit de calcul 7 comprend encore un microprocesseur 14. Le logiciel du microprocesseur 14 est prévu de manière que le circuit de calcul 7 fonctionne, par exemple, comme un filtre transversal récursif autoadaptatif avec décision dans la boucle.

Dans le convertisseur analogique-numérique 12, la fréquence d'échantillonnage est égale à la fréquence bit, l'instant d'échantillonnage étant centré dans chaque temps élémentaire.

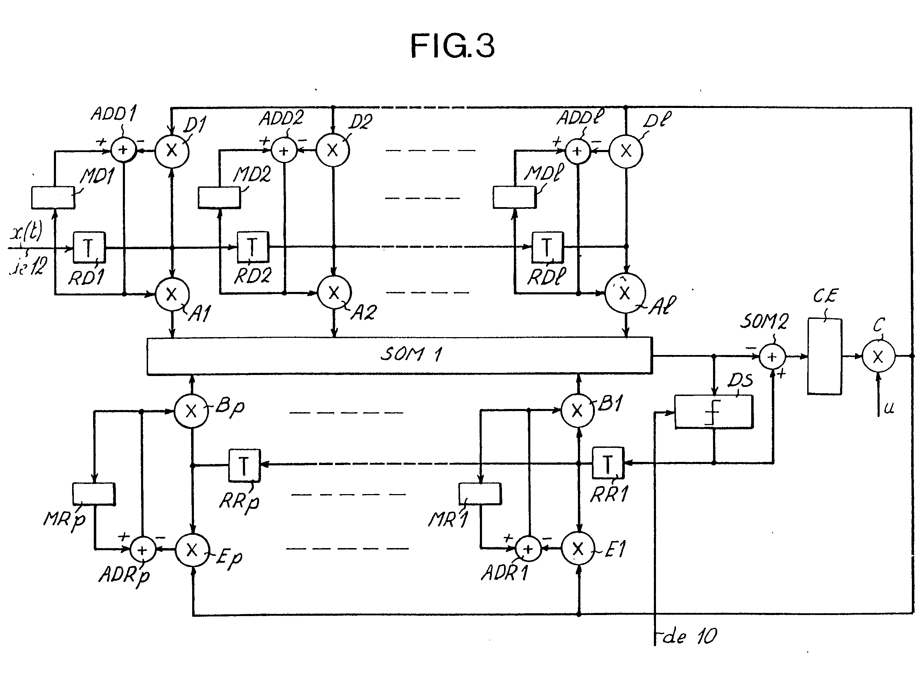

Le schéma de la Fig. 3 symbolise le filtre constitué par le circuit de calcul 7. Les échantillons X(t), provenant du convertisseur analogique-numérique 12, sont appliqués à l'entrée d'une chaîne de $l$ registres RD1 à RDl. Les sorties des registres RD1 à RDl sont respectivement reliées aux premières entrées de $l$ multiplicateurs numériques A1 à Al dont les sorties sont reliées aux $l$ premières entrées d'un sommateur numérique SOM1. Les registres RD1 à RDl peuvent fonctionner en registre à décalage avec une horloge de période T.

La sortie du sommateur SOM1 est reliée, d'une part, à l'entrée d'un détecteur à seuil DS et, d'autre part, à l'entrée d'un sommateur SOM2 dont l'entrée+est reliée à la sortie du détecteur DS.

La sortie du détecteur DS est reliée à l'entrée d'une chaîne de $p$ registres à décalages RR1 à RRp. Les sorties des registres RR1 à RRp sont respectivement reliées aux premières entrées de $p$ multiplicateurs B1 à Bp dont les sorties sont reliées à $p$ entrées du sommateur SOM1. Les registres RR1 à RRp peuvent former un registre à décalage avec une horloge de période T. L'entrée de commande du niveau du seuil dans le détecteur DS est reliée à la sortie du circuit de calcul de valeur moyenne 10.

Les éléments du schéma de la Fig. 3 qui viennent d'être décrits constituent une partie d'un filtre numérique transversal récursif avec décision dans la boucle. L'autre partie du filtre doit comprendre un circuit de calcul des coefficients des multiplicateurs A1 à Al et B1 à Bp. On va maintenant décrire ce circuit de calcul.

La sortie du sommateur SOM2 est reliée à un circuit d'estimation CE dont la sortie est reliée à un multiplicateur C à la seconde entrée duquel est appliquée la valeur d'un coefficient μ.

La sortie du multiplicateur C est reliée aux premières entrées d'une première série de multiplicateurs D1 à Dl et d'une seconde série de multiplicateurs E1 à Ep. Les secondes entrées des multiplicateurs D1 à Dl sont respectivement reliées aux sorties des registres RD1 à RDl. Les secondes entrées des multiplicateurs E1 à Ep sont respectivement reliées aux sorties des registres RR1 à RRp.

Les sorties des multiplicateurs D1 à Dl sont respectivement reliées aux entrées—de sommateurs ADD1 à ADDl dont les sorties sont respectivement reliées, d'une part, aux secondes entrées des multiplicateurs A1 à Al et, d'autre part, aux entrées de mémoires MD1 à MDl. Les sorties des mémoires MD1 à MDl sont respectivement reliées aux entrées+des sommateurs ADD1 à ADDl.

Les sorties des multiplicateurs E1 à Ep sont respectivement reliées aux entrées—de sommateurs ADR1 à ADRp dont les sorties sont respectivement reliées, d'une part, aux secondes entrées des multiplicateurs B1 à Bp et, d'autre part, aux entrées de mémoires MR1 à MRp. Les sorties des mémoires MR1 à MRp sont respectivement reliées aux entrées+des sommateurs ADR1 à ADRp.

Les mémoires MD1 à MDl présentent à leurs sorties, à l'instant d'échantillonnage $k$, les valeurs $H1^k$ à $Hl^k$ qui y ont été écrites à l'instant d'échantillonnage $(k-1)$. Dans les mêmes conditions, les mémoires MR1 à MRp délivrent les valeurs $J1^k$ à $Jp^k$.

Dans la pratique, le signal de sortie du sommateur SOM2 correspond à l'écart $e$ entre le signal estimé $a_k$ délivré par le détecteur DS et le signal de sortie $y_k$ du sommateur SOM1. Les indices $k$ indiquent le rang des échantillons numériques considérés.

Le signal $e$ est donc un signal d'erreur qui est traité dans le circuit d'estimation CE.

Comme on l'a mentionné plus haut, on utilise, comme critère d'optimisation du correcteur, celui de l'erreur quadratique moyenne. Si F(H) représente l'erreur quadratique moyenne, on a:

$$F(H)=E(|a_k-y_k|^2)=E(|e|^2)$$

où le vecteur $\vec{H}$ est le vecteur correspondant aux coefficients H1 à HI.

L'algorithme choisi pour minimiser le critère F(H) est, dans un exemple de réalisation suivant l'invention, l'algorithme du gradient qui est défini ci-dessous.

On désire obtenir que la différence $(F(H_k)-F(H_{k+1}))$ soit minimale. Si l'on pose:

$$\vec{H}_{k+1}=\vec{H}_k+\vec{h} \text{ avec } h\ll H_k,$$

un développement limité au premier ordre de $F(H_{k+1})$ donne:

$$F(\vec{H}_k)-F(\vec{H}_{k+1})=-\vec{h}^T \cdot \Delta F(H_k)$$

Dans le sens d'une minimalisation, le premier membre de l'égalité ci-dessus est une grandeur positive. Le second membre étant le produit scalaire de deux vecteurs, il faut que $\vec{h}^T$ soit de sens opposé à $\Delta \cdot F(\vec{H}_k)$ et qu'il lui soit parallèle pour majorer ce produit scalaire, ce qui implique:

$$\vec{h}=\mu \cdot \Delta F(\vec{H}_k) \text{ avec } \mu>0$$

Soit:

$$\vec{H}_{k+1}=\vec{H}_k-\mu \cdot \Delta F(\vec{H}_k)$$

D'autre part:

$$\Delta F(H_k)=\Delta(a_k-y_k)^2$$

avec:

$$y_k=H_k^T X_k^T$$

où le vecteur $\vec{X}_k$ représente les échantillons présents dans le filtre, c'est-à-dire les échantillons disponibles sur les secondes entrées des multiplicateurs D1 à DI.

On a donc:

$$\begin{aligned}\Delta F(H_k)&=2X_k(H_k^T X_k^T-a_k)\\&=2X_k(a_k-y_k)\\&=2X_k e_k\end{aligned}$$

où $e_k$ est le signal disponible à la sortie du sommateur SOM2.

Le pas de convergence de l'algorithme est une valeur constante $\mu$ que l'on choisit voisine de la valeur $\mu$ définie ci-dessus.

Dans la pratique, on peut négliger la valeur de $e_k$, et ne conserver que son signe $sg(e_k)$, la valeur de $\mu$ est ajustée en conséquence.

Dans l'exemple de réalisation de la Fig. 3, le circuit CE est prévu pour délivrer le signal $sg(e_k)$. On a donc, sur les premières entrées des multiplicateurs D1 à DI, le signal $\mu \cdot sg(e_k)$ et, comme les secondes entrées des sommateurs ADD1 à ADDI forment les composantes du vecteur $\vec{H}_k$, on a bien à la sortie des mêmes sommateurs les composantes du vecteur $\vec{H}_{k+1}$.

Dans la description qui précède, on n'a considéré que le vecteur $\vec{H}_k$ formé des coefficients H1 à HI et on a appliqué le même signal d'incrémentation $\mu \cdot sg(e_k)$ aux multiplicateurs E1 à Ep qu'aux multiplicateurs D1 à DI. Mais il faut bien comprendre que l'on pourrait, pour obtenir les coefficients J1 à Jp, choisir un pas de convergence $\mu'$ différent de $\mu$.

Dans la pratique, les différentes opérations—additions, multiplications, retards—qui sont effectuées par les éléments correspondants—sommateurs, multiplicateurs, registres—montrés à la Fig. 3 peuvent également être effectuées à l'aide d'un logiciel approprié du microprocesseur 14 de la Fig. 2. En effet, tous les échantillons $X_k$, $Y_k$, $H1_k$ à $HI_k$, $J1_k$ à $Jp_k$ sont disponibles dans la mémoire 13, qui contient également la valeur de $\mu$ et éventuellement de $\mu'$. Enfin, pour le fonctionnement du circuit de décision à seuil DS, le circuit de calcul de la valeur moyenne 9 fournit périodiquement cette valeur qui est aussi mémorisée dans la mémoire 13.

Le circuit de calcul 7 de la Fig. 2 comprend encore un registre tampon 15 dans lequel sont mémorisés les coefficients du vecteur $\vec{H}_k$, c'est à dire les coefficients de sortie des mémoires MD1 à MDI. Les sorties du registre tampon sont respectivement reliées à des entrées de commande du filtre linéaire analogique 6, ces entrées de commande délivrant les coefficients des multiplicateurs du filtre 6.

Le filtre 6 peut être constitué par une série de cellules à retard, chaque cellule apportant un retard T. Au point de jonction entre deux longueurs de câble, est inséré un circuit multiplicateur analogique, dont une entrée est reliée à la fin de la longueur de câble amont et la sortie à l'entrée de la longueur de câble aval. L'autre entrée du multiplieur est reliée à la sortie d'un convertisseur numérique-analogique dont l'entrée numérique est reliée à la sortie correspondante du registre tampon 15.

En pratique, le contenu du registre tampon 15 n'est rafraîchi que périodiquement, par exemple toutes les dix secondes. Après chaque nouveau chargement du registre 15, les coefficients déjà calculés sont conservés dans la mémoire 13. Par contre, les échantillons présents dans cette mémoire sont remplacés par les nouveaux échantillons entrants.

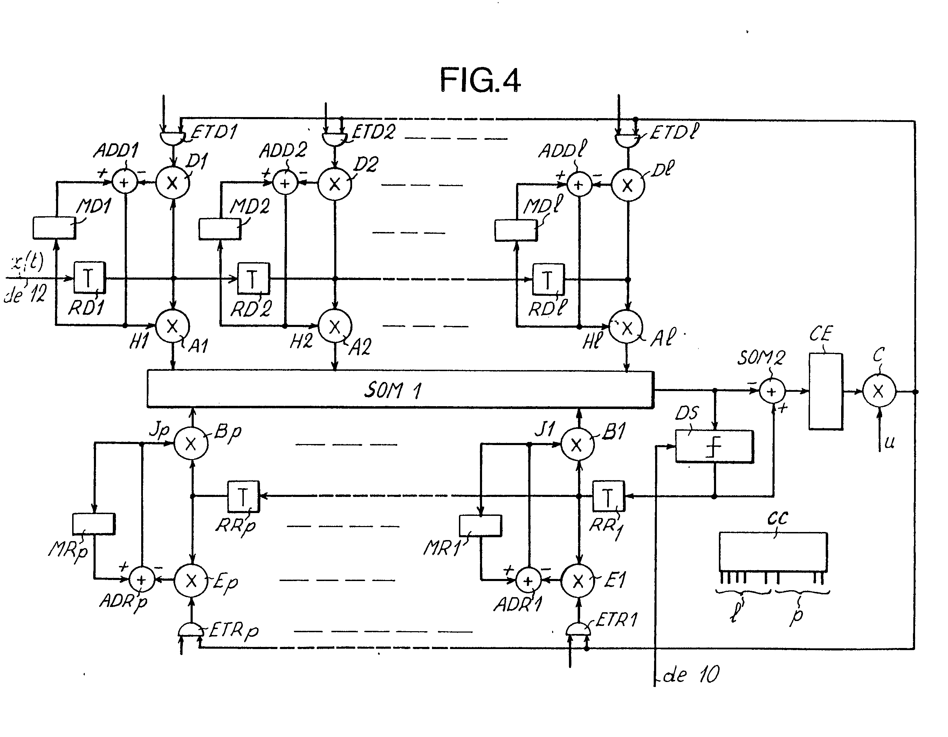

Dans le bloc-diagramme de la Fig. 4, on retrouve tous les éléments de celui de la Fig. 3. Il comporte, en supplément, un compteur cyclique CC à 1+p étages dont les 1+p sorties sont respectivement reliées aux premières entrées de portes ET ETD1 à ETDI et ETR1 à ETRp dont les secondes entrées sont reliées à la sortie du multiplicateur C et les sorties sont respectivement reliées aux premières entrées des multiplicateurs D1 à DI et E1 à Ep.

Dans le circuit de la Fig. 4, on utilise l'algorithme:

$$Fi_{k+1}=Fi_k-\mu \cdot Wi_k sg(e_k)$$

où Fi représente l'un des coefficients H1 à HI et J1 à Jp, la valeur de $i$ étant incrémentée d'une unité à chaque pas de calcul $k$ entre 1 et N, où N=I+p.

A l'instant initial, du fonctionnement du filtre de l'invention, l'un des coefficients H1 à HI prend la valeur 1 tandis que les autres coefficients sont nuls, ainsi que les coefficients J1 à Jp. Le rang du coefficient mis initialement à 1 définit ce qu'il est convenu d'appeler le coefficient central. Le choix du coefficient central permet de définir l'écart maximal temporel des échos que le filtre peut corriger.

L'expérience a montré que l'on obtenait, dans le cas de la télédiffusion de données DIDON, de bons résultats en utilisant un filtre transversal numérique, non récursif, comprenant dix cellules de retard, dans lequel le coefficient central est affecté à la quatrième cellule.

## Revendications

1. Dispositif de correction d'échos en transmission numérique, la correction étant effectuée sur le signal analogique démodulé reçu, le dispositif de correction comprenant un filtre transversal analogique (6) et un circuit de calcul (7) délivrant les coefficients directs a1 à ar ou les coefficients directs a1 à ar et récursifs b1 à bm du filtre transversal analogique (6), caractérisé en ce que l'entrée (E) du circuit de calcul (7) est reliée à l'entrée du filtre transversal analogique (6) et en ce que le circuit de calcul (7) comprend un convertisseur analogique/numérique (12) dont la sortie est reliée à un filtre transversal numérique autoadaptatif, les valeurs des coefficients des multiplicateurs du filtre transversal numérique étant appliquées, comme coefficients, aux multiplicateurs du filtre transversal analogique (6).

2. Dispositif de correction suivant la revendication 1, caractérisé en ce que le filtre transversal analogique (6) est direct ou récursif selon que le filtre transversal numérique est direct ou récursif.

3. Dispositif de correction suivant la revendication 1 ou 2, caractérisé en ce que, dans le circuit de calcul (7), le critère d'optimisation est celui de l'erreur quadratique moyenne et l'algorithme de convergence est celui du gradient, la correction itérative étant effectuée à chaque pas sur l'ensemble des coefficients du filtre transversal numérique.

4. Dispositif de correction suivant la revendication 1 ou 2, caractérisé en ce que, dans le circuit de calcul (7), le critère d'optimisation est celui de l'erreur quadratique moyenne et l'algorithme de convergence est celui du gradient, la correction itérative étant cycliquement effectuée sur chacun des coefficients du filtre transversal numérique.

5. Dispositif de correction suivant la revendication 3, caractérisé en ce que le filtre transversal numérique autoadaptatif est constitué par un circuit de calcul de moyenne (10), une mémoire d'échantillons (13) fournis par le convertisseur analogique/numérique (12), et un microprocesseur (14) effectuant sur les échantillons de la mémoire les multiplications par les coefficients qu'il calcule et la sommation des échantillons multipliés en fonction du critère d'optimisation et l'algorithme de convergence.

6. Dispositif de correction suivant la revendication 3, caractérisé en ce que le circuit de calcul est un filtre transversal à premiers multiplicateurs discrets (A1 à AI et B1 à Bp) dont chaque première entrée est respectivement reliée à la sortie d'une cellule de retard (RD1 à RDI et RR1 à RRp) et chaque sortie est reliée à une entrée correspondante d'un sommateur (SOM1), chaque seconde entrée de premier multiplicateur étant reliée à la sortie d'un additionneur (ADD1 à ADDI et ADR1 à ADRp), dont la sortie est reliée à une mémoire (MD1 à MDI et MR1 à MRp), une entrée (+) est reliée à la sortie de la mémoire (MD1 à MDI et MR1 à MRp) et une entrée (−) est reliée à la sortie d'un second multiplicateur (D1 à DI et E1 à Ep) dont une entrée est reliée à la sortie de la cellule de retard (RD1 à RDI et RR1 à RRp), la sortie du sommateur (SOM1) étant reliée à un ensemble de calcul (DS, SOM2, CE, C) dont la sortie est reliée en parallèle aux secondes entrées des seconds multiplicateurs (D1 à DI et E1 à Ep).

7. Dispositif de correction suivant la revendication 4, caractérisé en ce que le circuit de calcul est un filtre transversal à premiers multiplicateurs discrets (A1 à AI et B1 à Bp) dont chaque première entrée est respectivement reliée à la sortie d'une cellule de retard (RD1 à RDI et RR1 à RRp) et chaque sortie est reliée à une entrée correspondante d'un sommateur (SOM1), chaque seconde entrée de premier multiplicateur étant reliée à la sortie d'un additionneur (ADD1 à ADDI et ADR1 à ADRp), dont la sortie est reliée à une mémoire (MD1 à MDI et MR1 à MRp), une entrée (+) est reliée à la sortie de la une mémoire (MD1 à MDI et MR1 à MRp), et une entrée (−) est reliée à la sortie d'un second multiplicateur (D1 à DI et E1 à Ep) dont une entrée est reliée à la sortie de la cellule de retard (RD1 à RDI et RR1 à RRp), la sortie du sommateur (SOM1) étant reliée à un ensemble de calcul (DS, SOM2, CE, C) dont la sortie est reliée en parallèle aux premières entrées de portes ET (ETD1 à ETDI et ETR1 à ETRp) dont les sorties sont respectivement reliées aux secondes entrées des seconds multiplicateurs (D1 à DI et E1 à Ep), les secondes entrées des portes ET (ETD1 à ETDI et ETR1 à ETRp) étant respectivement reliées aux sorties d'un compteur cyclique (CC).

## Patentansprüche

1. Vorrichtung zur Echo-Korrektur bei digitaler Übertragung, wobei die Korrektur bei dem empfangenen demodulierten Analog-Signal vorgenommen wird, wobei die Korrekturvorrichtung ein analoges Transversalfilter (6) und eine Rechenschaltung (7) umfaßt, die die direkten Koeffizienten a1 bis ar oder die direkten Koeffizienten a1 bis ar und rekursive Koeffizienten b1 bis bm des analogen Transversalfilters (6) liefert, dadurch gekennzeichnet, daß der Eingang (E) der Rechenschaltung (7) mit dem Eingang des analogen Transversalfilters (6) verbunden ist, und daß die Rechenschaltung (7) einen Analog-Digital-Umsetzer (12) umfaßt, dessen Ausgang mit einem selbstanpassenden digitalen Transversalfilter verbunden ist, wobei die Werte der Koeffizienten der Multiplizierer des digitalen Transversalfilters als Koeffizienten den Multiplizierern des analogen Transversalfilters (6) zugeführt werden.

2. Korrekturvorrichtung nach Anspruch 1, dadurch gekennzeichnet, daß das analoge Transversalfilter (6) direkt oder rekursiv ist, je nach dem ob das digitale Transversalfilter direkt oder rekursiv ist.

3. Korrekturvorrichtung nach Anspruch 1 oder 2, dadurch gekennzeichnet, daß in der Rechenschaltung (7) das Optimierungskriterium dasjenige des mittleren quadratischen Fehlers und der Konvergenzalgorithmus derjenige des Gradienten ist, wobei die iterative Korrektur bei jedem Schritt für die Gruppe der Koeffizienten des digitalen Transversalfilters durchgeführt wird.

4. Korrekturvorrichtung nach Anspruch 1 oder 2, dadurch gekennzeichnet, daß in der Rechenschaltung (7) das Optimierungskriterium dasjenige des mittleren quadratischen Fehlers und der Konvergenzalgorithmus derjenige des Gradienten ist, wobei die iterative Korrektur zyklisch für jeden Koeffizienten des digitalen Transversalfilters durchgeführt wird.

5. Korrekturvorrichtung nach Anspruch 3, dadurch gekennzeichnet, daß das selbstanpassende digitale Transversalfilter aus einer den Mittelwert bildenden Schaltung (10), einem Speicher (13) für von dem Analog-Digital-Umsetzer (12) zugeführte Proben und einem Mikroprozessor (14) besteht, der für die Proben in dem Speicher die Multiplikationen mit den Koeffizienten, die dieser errechnet, und die Summierung der multiplizierten Proben nach Maßgabe des Optimierungskriteriums und des Konvergenzalgorithmus durchführt.

6. Korrekturvorrichtung nach Anspruch 3, dadurch gekennzeichnet, daß die Rechenschaltung ein Transversalfilter mit ersten diskreten Multiplizierern (A1 bis AI und B1 bis Bp) ist, deren jeweils erster Eingang mit jeweils dem Ausgang einer Verzögerungszelle (RD1 bis RDI und RR1 bis RRp) verbunden ist, und deren Ausgang jeweils mit einem entsprechenden Eingang eines Summierers (SOM1) verbunden ist, wobei jeder zweite Eingang des ersten Multiplizierers mit dem Ausgang einer Additionsschaltung (ADD1 bis ADDI und ADR1 bis ADRp) verbunden ist, deren Ausgang mit einem Speicher (MD1 bis MDI und MR1 bis MRp) verbunden ist, wobei ein Eingang (+) mit dem Ausgang des Speichers (MD1 bis MDI und MR1 bis MRp) und ein Eingang (−) mit dem Ausgang eines zweiten Multiplizierers (D1 bis DI und E1 bis Ep) verbunden ist, dessen einer Eingang mit dem Ausgang der Verzögerungszelle (RD1 bis RDI und RR1 bis RRp) verbunden ist, wobei der Ausgang des Summierers (SOM1) mit einer Rechenanordnung (DS, SOM2, CE, C) verbunden ist, deren Ausgang parallel mit den zweiten Eingängen der zweiten Multiplizierer (D1 bis DI und E1 bis Ep) verbunden ist.

7. Korrekturvorrichtung nach Anspruch 4, dadurch gekennzeichnet, daß die Rechenschaltung ein Transversalfilter mit ersten diskreten Multiplikatoren (A1 bis AI und B1 bis Bp) ist, deren jeweils erster Eingang mit jeweils dem Ausgang einer Verzögerungszelle (RD1 bis RDI und RR1 bis RRp) verbunden ist, und deren Ausgang jeweils mit einem entsprechenden Eingang eines Summierers (SOM1) verbunden ist, wobei jeder zweite Eingang des ersten Multiplizierers mit dem Ausgang einer Additions-Schaltung (ADD1 bis ADDI und ADR1 bis ADRp) verbunden ist, deren Ausgang mit einem Speicher (MD1 bis MDI und MR1 bis MRp) verbunden ist, wobei ein Eingang (+) mit dem Ausgang des Speichers (MD1 bis MDI und MR1 bis MRp) und ein Eingang (−) mit dem Ausgang eines zweiten Multiplizierers (D1 bis DI und E1 bis Ep) verbunden ist, dessen einer Eingang mit dem Ausgang der Verzögerungszelle (RD1 bis RDI und RR1 bis RRp) verbunden ist, wobei der Ausgang des Summierers (SOM1) mit einer Rechenanordnung (DS, SOM2, CE, C) verbunden ist, deren Ausgang parallel mit den ersten Eingängen von UND-Toren (ETD1 bis ETDI und ETR1 bis ETRp) verbunden ist, dessen Ausgänge jeweils mit den zweiten Eingängen der zweiten Multiplizierer (D1 bis DI und E1 bis Ep) verbunden sind, wobei die zweiten Eingänge der UND-Tore (ETD1 bis ETDI und ETR1 bis ETRp) jeweils mit den Ausgängen eines zyklischen Zählers (CC) verbunden sind.

**Claims**

1. Digital transmission echo cancellation apparatus, the cancellation being carried out on the demodulated received analog signal, the cancellation apparatus comprised of an analog transversal filter (6) and a computing circuit (7) generating the direct coefficients a1 to ar or the direct coefficients a1 to ar and recursive coefficients b1 to bm of the analog transversal filter (6), characterized in that the input (E) of computing circuit (7) is connected to the input of the analog transversal filter (6) and in that the computing circuit (7) is comprised of an analog-to-digital converter (12) whose output is connected to a self-adaptive digital transversal filter, the multiplier coefficient values of the digital transversal filter being applied, as coefficients, to the multipliers of the transversal analog filter (6).

2. Cancellation apparatus in accordance with claim 1, characterized in that the analog transversal filter (6) is direct or recursive depending on the digital transversal filter is direct or recursive.

3. Cancellation apparatus in accordance with claim 1 or 2, characterized in that, in the computing circuit (7), the optimization criterion is that of the quadratic mean error and the convergence algorithm is that of the gradient, the iterative correction being carried out at each step on the set of coefficients of the digital transversal filter.

4. Cancellation apparatus in accordance with claim 1 or 2 characterized in that, in the computing circuit (7), the optimization criterion is that the quadratic mean error and the convergence algorithm is that of the gradient, the iterative correction being cyclically carried out on each of the coefficients of the digital transversal filter.

5. Cancellation apparatus in accordance with claim 3, characterized in that the self-adaptative digital transversal filter is made up of an averaging circuit (10), a memory (13) for samples supplied by the analog-to-digital converter (12), and a microprocessor (14) that carries out on the samples in memory the multiplications by the coefficients which it computes and the summation of the multiplied samples in accordance with the optimization criterion and the convergence algorithm.

6. Cancellation apparatus in accordance with claim 3, characterized in that the computing circuit is a transversal filter with first discrete multipliers (A1 to AI and B1 to Bp) each whose first input is respectively connected to the output of a delay cell (RD1 to RDI and RR1 to RRp) and each whose output is connected to a corresponding input of a summer (SOM1), each second input of first multiplier being connected to the output of a summer (ADD1 to ADDI and ADR1 to ADRp), whose output is connected to a memory (MD1 to MDI and MR1 to MRp), a (+) input is connected to the output of a memory (MD1 to MDI and MR1 to MRp) and a (−) input is connected to the output of a second multiplier (D1 to DI and E1 to Ep) one input of which is connected to the output of delay cell (RD1 to RDI and RR1 to RRp), the output of summer (SOM1) being connected to a computing set (DS, SOM2, CE, C) whose output is connected in parallel to the second inputs of the second multipliers (D1 to DI and E1 to Ep).

7. Cancellation apparatus in accordance with claim 4, characterized in that the computing circuit is a transversal filter with first discrete multipliers (A1 to AI and B1 to Bp) each whose first input is respectively connected to the output of a delay cell (RD1 to RDI and RR1 to RRp) and each whose output is connected to a corresponding input of a summer (SOM1), each second input of first multiplier being connected to the output of a summer (ADD1 to ADDI and ADR1 to ADRp), whose output is connected to a memory (MD1 to MDI and MR1 to MRp), a (+) input is connected to the output of the memory (MD1 to MDI and MR1 to MRp) and a (−) input is connected to the output of a second multiplier (D1 to DI and E1 to Ep) one input of which is connected to the output of the delay cell (RD1 to RDI and RR1 to RRp), the output of summer (SOM1) being connected to a computing set (DS, SOM2, CE, C) whose output is connected in parallel to the first inputs of AND gates (ETD1 to ETDI and ETR1 to ETRp) whose outputs are respectively connected to the second inputs of the second multipliers (D1 to DI and E1 to Ep), the second inputs of AND gates (ETD1 to ETDI and ETR1 to ETRp) being respectively connected to the outputs of a cyclic counter (CC).

# FIG.1

# FIG.2

FIG.3

# FIG.4

0 140 809